# EUROPÄISCHE PATENTANMELDUNG

(11) **EP 0 809 374 A1**
(43) Veröffentlichungstag der Anmeldung: **26.11.1997**
(21) Anmeldenummer: 96108036.3
(22) Anmeldetag: 21.05.1996
(51) Int. Cl.: H04L 7/00, G01R 21/00

(54) **Verfahren zur Zeitsynchronisation eines Fernzählsystems**

(71) Anmelder: Landis & Gyr Technology Innovation AG, 6301 Zug (CH)
(72) Erfinder: La Roi, Hendrik C., 8001 Zürich (CH); Hess, Peter, 6331 Hünenberg (CH)

(57) **Zusammenfassung**

Das Fernzählsystem weist Fernzähl-Unterstellen zur Ermittlung von Zählwerten und mindestens eine Fernzähl-Zentrale auf. Die Fernzähl-Unterstellen werden von der Fernzähl-Zentrale aus zeitsynchronisiert. Die während vorgegebene Messperioden ermittelten Zählwerte werden von den Fernzähl-Unterstellen zu der Fernzähl-Zentrale übertragen. Zur Verhinderung einer Vielzahl von Verkürzungen oder Verlängerungen der Messperioden wird eine Fernzähl-Unterstelle erst dann zeitsynchronisiert, wenn der Absolutwert einer Zeitdifferenz (Δt) zwischen der Fernzähl-Zentrale und der betreffenden Fernzähl-Unterstelle einen bestimmten Grenzwert (P1) überschreitet. Das Verfahren verringert die durch die Zeitsynchronisierungen verursachten Zeit-Messfehler der Messperioden und damit die Fehler der Zählwerterfassung.

## Beschreibung

Die Erfindung bezieht sich auf ein Verfahren zur Zeitsynchronisation eines Fernzählsystems gemäss dem Oberbegriff des Anspruchs 1.

In Fernzählsystemen werden hauptsächlich Zählwerte und/oder davon abgeleitete Werte von Fernzähl-Unterstellen zu einer Fernzähl-Zentrale übertragen, wobei die Zählwerte und die abgeleiteten Werte in den Fernzähl-Unterstellen für vorgegebene Messperioden ermittelt und/oder berechnet werden. Die übertragenen Zählwerte bzw. abgeleiteten Werte werden hauptsächlich zu Tarifzwecken verwendet und müssen daher aus juristischen und anderen Gründen sehr genau sein. Diese Genauigkeit hängt unter anderem von der Genauigkeit der Messperioden-Dauer ab. Eine Uhr der Fernzähl-Zentrale wird vorzugsweise mittels eines Zeitnormals zeitsynchronisiert, während die Fernzähl-Unterstellen ihrerseits von der Fernzähl-Zentrale aus zeitsynchronisiert werden. Jede Zeitsynchronisierung bedeutet jedoch einen kleinen Zeit-Messfehler der Messperiode, da die letztere durch die Zeitsynchronisierung entweder verkürzt oder verlängert wird, und ergibt damit einen Fehler in der Zählwerterfassung bzw. in der Erfassung der abgeleiteten Werte, was in anbetracht der vielen Synchronisierungen einen unzulässig grossen Fehler ergibt.

Der Erfindung liegt die Aufgabe zugrunde, ein Verfahren der eingangs genannten Art zu realisieren, welches mit möglichst wenig Aufwand die durch die Zeitsynchronisierungen verursachten Zeit-Messfehler und damit die Fehler in der Zählwerterfassung und in der Erfassung der abgeleiteten Werte verringert.

Die genannte Aufgabe wird erfindungsgemäss durch die im Kennzeichen des Anspruchs 1 angegebenen Merkmale gelöst. Vorteilhafte Ausgestaltungen der Erfindung ergeben sich aus den abhängigen Ansprüchen.

Ein Ausführungsbeispiel der Erfindung ist in der Zeichnung dargestellt und wird im folgenden näher beschrieben.

Es zeigen:
- Fig. 1: ein Blockschaltbild eines Fernzählsystems,
- Fig. 2: ein Flussdiagramm eines erfindungsgemässen Verfahrens und
- Fig. 3: ein Diagramm verschiedener Zeitfenster.

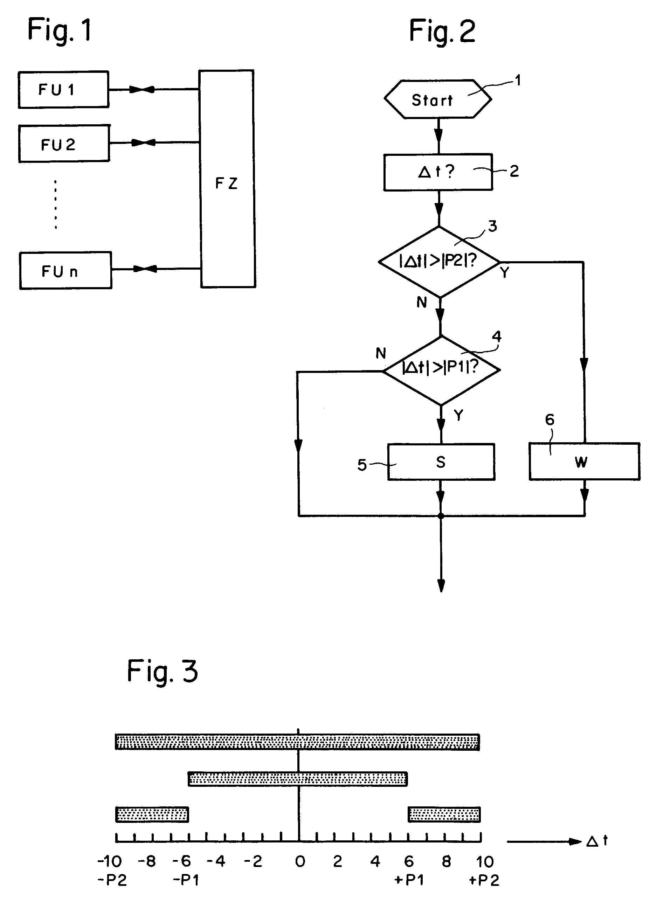

Ein Fernzählsystem (siehe Fig. 1) weist Fernzähl-Unterstellen FU1, FU2, ... und FUn unter anderem zur Ermittlung von Zählwerten und mindestens eine Fernzähl-Zentrale FZ auf, wobei zwischen der letzteren und den Fernzähl-Unterstellen FU1 bis FUn, z. B. über getrennte Übertragungswege, Daten in beiden Richtungen übertragen werden. Die Zählwerte werden in den Unterstellen FU1 bis FUn mittels fernablesbarer Zähler und/oder fernablesbarer Zählwert-Sammelgeräte ermittelt. Die Zähler sind vorzugsweise Elektrizitäts-, Gas-, Wasser- und/oder Wärmezähler.

Sämtliche zeitabhängige Funktionen der mit einem Computer ausgerüsteten Fernzähl-Zentrale FZ basieren auf einer Uhrzeit dieses Computers. Genügt die damit erreichte Zeitgenauigkeit nicht, wird eine interne Uhr der Fernzähl-Zentrale FZ mittels eines als Zeitnormal dienenden, externen standardisierten Zeitsignals zeitsynchronisiert. Z. B. wird die Fernzähl-Zentrale FZ mittels Signale des deutschen DCF-77-Senders oder eines amerikanischen GPS ("Global Positioning System") - Satelliten zeitsynchronisiert. Sind mehrere Zentralrechner miteinander vernetzt, gilt die Zeitbasis eines mit einem Zeitsignal-Empfänger ausgestatteten Rechners als Zeitbasis für das gesamte Netzwerk. Der Zeitsignal-Empfänger belegt eine serielle Schnittstelle der zu ihm gehörenden Fernzähl-Zentrale FZ und ist jeweils signalspezifisch ausgelegt. Falls der Empfang des Zeitsignals in der Fernzähl-Zentrale FZ qualitativ schlecht oder gar unmöglich ist, übernimmt ein Quarzoszillator im Zeitsignal-Empfänger die Funktion des DCF-77-Senders bzw. des GPS-Satelliten. Ein Systemadministrator definiert in diesem Fall, wie sich die Fernzähl-Zentrale FZ zu verhalten hat. Die Zeit der Fernzähl-Zentrale FZ wird dann entweder zum festgelegten Zeitpunkt gesetzt, ungeachtet des schlechten Empfangs des Zeitsignals und des Umschaltens auf den internen Quarzoszillator, oder die Zeit wird gar nicht gesetzt, wenn zum Zeitpunkt der Zeitsynchronisation der Zeitsignal-Empfänger mit dem internen Quarzoszillator arbeitet.

Die Fernzähl-Unterstellen FU1 bis FUn werden ihrerseits vorzugsweise von der Fernzähl-Zentrale FZ aus zeitsynchronisiert. Die während vorgegebene Messperioden ermittelten Zählwerte werden von den Fernzähl-Unterstellen FU1 bis FUn zu der Fernzähl-Zentrale FZ übertragen. Jede Zeitsynchronisierung einer der Fernzähl-Unterstellen FU1 bis FUn ergibt einen kleinen Fehler in der Dauer der Messperiode, da die letztere durch jede Zeitsynchronisierung entweder verkürzt oder verlängert wird. Um möglichst wenig solcher verfälschten Messperioden zu erhalten, d. h. zur Verhinderung einer Vielzahl von durch Synchronisierungen verursachten Verkürzungen oder Verlängerungen der Messperioden, wird eine Fernzähl-Unterstelle FU1 bzw. FU2 bzw. .. bzw. FUn erfindungsgemäss erst dann zeitsynchronisiert, wenn der Absolutwert einer Zeitdifferenz Δt zwischen der Fernzähl-Zentrale FZ und der betreffenden Fernzähl-Unterstelle FU1 bzw. FU2 bzw. .. bzw. FUn einen bestimmten ersten vorgegebenen positiven Grenzwert P1 überschreitet. Ist die Zeitdifferenz Δt im Absolutwert kleiner als der erste Grenzwert P1 erfolgt keine Zeitsynchronisierung. Es erfolgt vorzugsweise auch keine Zeitsynchronisierung der betreffenden Fernzähl-Unterstelle FU1 bzw. FU2 bzw. .. bzw. FUn, wenn der Absolutwert der Zeitdifferenz Δt zwischen der Fernzähl-Zentrale FZ und der betreffenden Fernzähl-Unterstelle FU1 bzw. FU2 bzw. .. bzw. FUn einen bestimmten zweiten vorgegebenen positiven Grenzwert P2 überschreitet, der grösser ist als der erste vorgegebene Grenzwert P1. Wenn der Absolutwert der Zeitdifferenz Δt zwischen der Fernzähl-Zentrale FZ und der betreffenden Fernzähl-Unterstelle FU1 bzw. FU2 bzw. .. bzw. FUn den bestimmten zweiten vorgegebenen Grenzwert P2 überschreitet wird vorzugsweise eine entsprechende Warnung oder ein Alarm der betreffenden Fernzähl-Unterstelle FU1 bzw. FU2 bzw. .. bzw. FUn von der Fernzähl-Zentrale FZ erzeugt.

In der Fig. 2 ist ein Flussdiagramm des erfindungsgemässen Verfahrens dargestellt, welches einen ersten Funktionsblock 1, einen zweiten Funktionsblock 2, einen ersten Entscheidungsblock 3, einen zweiten Entscheidungsblock 4 und einen dritten Funktionsblock 5 enthält, die in der angegebenen Reihenfolge in Reihe geschaltet sind. Die Ja-Ausgänge der Entscheidungsblöcke 3 und 4 sind mit Y ("Yes") und die Nein-Ausgänge mit N ("No") gekennzeichnet. Nach dem Start der Routine (Funktionsblock 1) wird im Funktionsblock 2 der Wert der Zeitdifferenz Δt ermittelt und deren Absolutwert im Entscheidungsblock 3 mit dem zweiten Grenzwert P2 verglichen. Ist ihr Absolutwert nicht grösser als der Grenzwert P2 (Ausgang N von 3), wird im Entscheidungsblock 4 der Absolutwert der Zeitdifferenz Δt mit dem ersten Grenzwert P1 verglichen und, falls er grösser als der Grenzwert P1 ist (Ausgang Y von 4), im Funktionsblock 5 eine Synchronisierung S durchgeführt. Falls der Absolutwert dagegen nicht grösser als der Grenzwert P1 ist (Ausgang N von 4), wird der Funktionsblock 5 übersprungen und geht das Programm unmittelbar zum Ausgang des Funktionsblocks 5, der gleichzeitig der Ausgang der Routine ist. Wenn der Absolutwert der Zeitdifferenz Δt grösser als der Grenzwert P2 ist (Ausgang Y von 3) geht das Programm zu einem vierten Funktionsblock 6, gemäss welchem die Warnung W oder der Alarm in der Fernzähl-Zentrale FZ ausgelöst wird. Anschliessend geht das Programm zum Ausgang der Routine.

Aus der Fig. 3 sind verschiedene Zeitfenster ersichtlich. Für Werte der Zeitdifferenz Δt, die zwischen -P1 und +P1 liegen, erfolgt keine Synchronisierung S und keine Warnung W. Die Werte der Zeitdifferenz Δt, die zwischen +P2 und +P1 oder zwischen -P2 und -P1 liegen, bilden zusammen ein parametrierbares Synchronisations-Fenster. Liegt der Wert der Zeitdifferenz Δt innerhalb dieses Synchronisations-Fensters, erfolgt eine Synchronisierung S der betreffenden Fernzähl-Unterstelle FU1 bzw. FU2 bzw. .. bzw. FUn und keine Warnung W der Fernzähl-Zentrale FZ. Nur innerhalb des Synchronisations-Fensters werden somit Zeitsynchronisierungen ohne Warnungs-Auslösung durchgeführt. Sind die Werte der Zeitdifferenz Δt grösser als +P2 oder kleiner als -P2, wird keine Synchronisierung S der betreffenden Fernzähl-Unterstelle FU1 bzw. FU2 bzw. .. bzw. FUn durchgeführt. Es wird jedoch eine Warnung W in der Fernzähl-Zentrale FZ ausgelöst. Da die Zeitsynchronisierungen in bestimmten grossen Zeitintervallen erfolgen, kann durch die Warnung W jeweils ein zu grosses Abweichen der Zeitbasis der betreffenden Fernzähl-Unterstelle FU1 bzw. FU2 bzw. .. bzw. FUn durch die Fernzähl-Zentrale FZ festgestellt werden.

Die beiden vorgegebenen Grenzwerte P1 und P2 und damit das Synchronisations-Fenster können in der Fernzähl-Zentrale FZ und/oder vor Ort frei vom Benutzer ausgewählt und vorgegeben werden, d. h. sie sind frei parametrierbar. Sie können z. B. vor Ort in den Fernzähl-Unterstellen FU1 bis FUn über einen Synchronisations-Eingang parametriert werden. Es kann zwischen eine nicht aktive Zeitsynchronisation, eine Zeitsynchronisation mit positiven Flanken oder eine solche mit negativen Flanken gewählt werden. Die Anzahl der Zeitsynchronisierungen pro Tag ist bevorzugt programmierbar, wobei die Zeitsynchronisierungen in regelmässigen Zeitabständen über den Tag verteilt erfolgen. Pro Tag findet automatisch mindestens eine Zeitsynchronisierung statt. Maximal kann z. B. alle 15 Minuten eine Zeitsynchronisierung erfolgen.

## Patentansprüche

1. Verfahren zur Zeitsynchronisation eines Fernzählsystems, welches Fernzähl-Unterstellen (FU1 bis FUn) zur Ermittlung von Zählwerten und mindestens eine Fernzähl-Zentrale (FZ) aufweist, wobei die Fernzähl-Unterstellen (FU1 bis FUn) von der Fernzähl-Zentrale (FZ) aus zeitsynchronisiert und die während vorgegebene Messperioden ermittelten Zählwerte von den Fernzähl-Unterstellen (FU1 bis FUn) zu der Fernzähl-Zentrale (FZ) übertragen werden, dadurch gekennzeichnet, dass zur Verhinderung einer Vielzahl von Verkürzungen oder Verlängerungen der Messperioden eine Fernzähl-Unterstelle (FU1, FU2, .. , FUn) erst dann zeitsynchronisiert wird, wenn der Absolutwert einer Zeitdifferenz (Δt) zwischen der Fernzähl-Zentrale (FZ) und der betreffenden Fernzähl-Unterstelle (FU1, FU2, .. , FUn) einen bestimmten ersten vorgegebenen Grenzwert (P1) überschreitet.

2. Verfahren nach Anspruch 1, dadurch gekennzeichnet, dass keine Zeitsynchronisierung (S) der betreffenden Fernzähl-Unterstelle (FU1, FU2, .. , FUn) erfolgt, wenn der Absolutwert der Zeitdifferenz (Δt) zwischen der Fernzähl-Zentrale (FZ) und der betreffenden Fernzähl-Unterstelle (FU1, FU2, .. , FUn) einen bestimmten zweiten vorgegebenen Grenzwert (P2) überschreitet, der grösser ist als der erste vorgegebene Grenzwert (P1).

3. Verfahren nach Anspruch 1 oder 2, dadurch gekennzeichnet, dass, wenn der Absolutwert der Zeitdifferenz (Δt) zwischen der Fernzähl-Zentrale (FZ) und der betreffenden Fernzähl-Unterstelle (FU1, FU2, .. , FUn) einen bestimmten zweiten vorgegebenen Grenzwert (P2) überschreitet, der grösser ist als der erste vorgegebene Grenzwert (P1), eine entsprechende Warnung (W) der betreffenden Fernzähl-Unterstelle (FU1, FU2, .. , FUn) von der Fernzähl-Zentrale (FZ) erzeugt wird.

4. Verfahren nach einem der Ansprüche 1 bis 3, dadurch gekennzeichnet, dass ein und/oder beide vorgegebene Grenzwerte (P1, P2) frei parametrierbar sind.
